(19) Europäisches Patentamt
European Patent Office
Office européen des brevets

(11) **EP 2 327 918 A1**

(12) **EUROPEAN PATENT APPLICATION**
published in accordance with Art. 153(4) EPC

(43) Date of publication:
01.06.2011 Bulletin 2011/22

(51) Int Cl.:
*F16L 47/02* (2006.01)    *C08L 25/04* (2006.01)
*C08L 71/12* (2006.01)

(21) Application number: 09816227.4

(22) Date of filing: 16.09.2009

(86) International application number:
PCT/JP2009/066710

(87) International publication number:
WO 2010/035813 (01.04.2010 Gazette 2010/13)

(84) Designated Contracting States:
AT BE BG CH CY CZ DE DK EE ES FI FR GB GR HR HU IE IS IT LI LT LU LV MC MK MT NL NO PL PT RO SE SI SK SM TR
Designated Extension States:
AL BA RS

(30) Priority: 26.09.2008 JP 2008248614

(71) Applicant: Asahi Organic Chemicals Industry Co., Ltd.
Nobeoka-city
Miyazaki 882-8688 (JP)

(72) Inventors:
• KOUROGI, Hidehiro
Nobeoka-shi
Miyazaki 882-8688 (JP)
• KAI, Yoshihisa
Nobeoka-shi
Miyazaki 882-8688 (JP)

(74) Representative: **Patentanwälte**
**Ruff, Wilhelm, Beier, Dauster & Partner**
**Kronenstraße 30**
**70174 Stuttgart (DE)**

(54) **PROCESS FOR JOINING PIPING MEMBERS AND PIPING MEMBERS CONSISTING OF POLYPHENYLENE ETHER RESIN COMPOSITION WHICH ARE JOINED BY THE PROCESS**

(57) A method of connection of piping members made from a polyphenylene ether-based resin composition **characterized in that** the piping members made from a polyphenylene ether-based resin composition are comprised of a polyphenylene ether-based resin composition which has a polyphenylene ether-based resin in "a" parts by mass and a polystyrene-based resin in "b" parts by mass as essential ingredients, has the "a" and "b" satisfying the relationships of a+b=100 and a:b=(10 to 90):(90 to 10), and has a melt flow rate after kneading of 1.0 to 10.0 g/10 min, comprising heating and melting an outer circumferences of the pipe part and an inner circumferences of the mouth part of the piping members made from a polyphenylene ether-based resin composition by a heating temperature H(°C) of H=[220°C+ {100°C×("a" parts by mass/100 parts by mass)}]±10°C then inserting the pipe part into the mouth part to melt bond them.

Fig.4

**Description**

Technical Field

The present invention relates to a method of connecting piping members molded using a polyphenylene ether-based resin composition and piping members made from a polyphenylene ether-based resin composition connected by that method of connection.

Background Art

A polyphenylene ether-based resin composition has excellent properties of rigidity, heat resistance, chemical resistance, etc. and is used for industrial products such as office automation equipment, electrical products, electronic parts, and auto parts (for example, wheel caps, fenders, etc.)

Further, a polyphenylene ether-based resin composition has resistance to acids and alkalis in the high temperature region (60 to 95°C). The price is relatively low even among general use engineering plastics, so this is suitable for high temperature-use piping members for carrying high temperature chemicals in the industrial field. Such a high temperature-use piping members are shifting from the conventional metal pipes to plastic pipes as a general trend. Piping members made from a polyphenylene ether-based resin composition are also candidates for this, so they are expected to spread in use in the future.

Piping members made from a polyphenylene ether-based resin composition have not yet spread much in the public, but as the method of connection of such piping members, in general the method of connection using a mechanical fitting, the method of connection using screws, etc. may be considered.

However, the fields in which piping members made from a polyphenylene ether-based resin composition can be expected to spread are tough usage environments in which the piping is subjected to a heat cycle. Further, high temperature chemicals are the main fluids transported. Therefore, connection of piping members by mechanical fittings is unsuitable if considering the unease over the long-term seal and the need for maintenance etc. In such fields, methods of integrally connecting the piping members are being sought. As methods for integrally connecting the piping members, in general, the method of joining members by hot bonding, the method of joining members by an adhesive, and the method of joining members by welding may be considered. However, the method of joining members by an adhesive uses an adhesive to bond the coated surfaces. At the present, there is no adhesive for a polyphenylene ether-based resin composition giving the physical properties sought from piping members. Further, with general plastic piping, the method of joining members by welding cannot give sufficient strength of the connected parts compared with the methods of connection using hot bonding and adhesives, so is unsuitable for tough usage environments. Therefore, for the connection of piping members made from a polyphenylene ether-based resin composition, it is expected that the method of hot bonding the connected parts would be suitable, but not even the melt bonding conditions for hot bonding the still not that popular piping members made from a polyphenylene ether-based resin composition have yet been established.

As the method of connecting piping members by hot bonding in the past, for piping members made of polyvinyl chloride (below, referred to as "PVC"), there was the method of connection such as shown in PLT 1. This is constituted to heat and melt an insertion part of a PVC pipe and a pipe mouth of a pipe fitting and insert the PVC pipe in the pipe fitting for connection by melt bonding during which making the heating time of the pipe mouth of the pipe fitting 1.5 to 3 times longer than the heating time of the insertion part of the PVC pipe and ending the heating of the pipe mouth of the pipe fitting while the insertion part of the PVC pipe is in a hot melted state so as to thereby reduce the shrinkage stress due to the heating and improve the water pressure resistance and chemical resistance.

Further, in other materials, in connection of polypropylene (hereinafter referred to as "PP") or polystyrene (hereinafter referred to as "PE") piping members, the method of connection using hot bonding is widely spreading. There is the connection method such as shown in PLT 2. This is constituted to use a pipe fitting made of a PE resin having a melt flow rate (hereinafter referred to as the "MFR") of 0.10 to 0.18/10 min so as to connect a PE pipe and pipe fitting by hot bonding so as to thereby avoid uneven flow of the resin when hot bonding the PE pipe and pipe fitting, prevent the occurrence of melt sinks of the fitting, and make the fitting resistant to cracking even with long-term use. Further, PLT 3 describes a method aimed at providing a method able to strongly connect water cross-linkable polyolefin pipes by melt bonding. As a specific means for this, the method of connecting water cross-linkable polyolefin pipes by a water cross-linkable polyolefin fitting, which method of connecting water cross-linkable polyolefin pipes characterized by heating the outer wall surface of a pipe and the inner wall surface of a fitting to a temperature of (t+60)°C to (t+160)°C and not more than 400°C where the melting point of the water cross-linkable polyolefin is made t°C, then inserting the pipe into the fitting to melt bond them is disclosed. Furthermore, PLT 4 has as its object the provision of a method of hot bonding a pipe and pipe or a pipe and member in the method of connecting a polyethylene pipe or member and polypropylene pipe or member and discloses a method of connecting a polyethylene pipe or member and a polypropylene pipe or member, which method of connecting a polyethylene pipe or member and a polypropylene pipe or member characterized by using a pipe or fitting or film- or sheet-shaped joining member comprised of a polyethylene in 10 to 90 wt% and a polypropylene in 90 to 10 wt% to melt bond the pipe and pipe or the pipe and member.

Cited Literature

Patent Literature

PLT 1: Japanese Patent Publication (A) No. 8-216262
PLT 2: Japanese Patent Publication (A) No. 4-337191
PLT 3: Japanese Patent Publication (A) No. 59-101327
PLT 4: Japanese Patent Publication (A) No. 2000-257786

Summary of Invention

Technical Problem

However, a polyphenylene ether-based resin composition differs from PP, PE, and PVC in melt temperature, so it is difficult to hot bond a piping member made of a polyphenylene ether-based resin composition under the same melt bonding conditions as a PP piping member, PE piping member, or PVC piping member. In particular, PP and PE are crystalline resins and differ in modes of melting from the amorphous resin of a polyphenylene ether-based resin composition, so under the same melt bonding conditions as a PP piping member or PE piping member, there was the problem that the surface of the heated piping member would not sufficiently melt and a sufficient strength of the melt bonded fitting part would not be obtained.

Further, PVC is a polymer comprised of a single type of monomer, but a polyphenylene ether-based resin composition is a polymer alloy of resins different in properties such as a polyphenylene ether-based resin and a polystyrene-based resin, so the melt temperature, MFR, and other physical properties will change depending on the compounding ratio of the different resins forming the polyphenylene ether-based resin composition. For this reason, when connecting piping members made of a polyphenylene ether-based resin composition by hot bonding, with just a single type of melt bonding conditions, it is difficult to hot bond piping members made of polyphenylene ether-based resin compositions with different compounding ratios of resins. It is necessary to use suitable heating temperatures, heating times, and other melt bonding conditions for each compounding ratio of the resins. That is, even if deriving the optimal melt bonding conditions for a specific compounding ratio of a polyphenylene ether-based resin composition, the melt bonding conditions will not always be suitable for polyphenylene ether-based resins of different compounding ratios. When the melt bonding conditions are not suitable for the compounding ratio, there is the problem that if the piping members are not sufficiently melted, the piping will detach, while if they are overly melted, they will deform or suitable hot bonding is liable to not be possible or even if hot bonding is possible appearance wise, when stress concentrates or when used for a long period of time, cracks will easily form and other melt bonding defects are liable to be caused. Due to this, there is the problem that to hot bond polyphenylene ether-based resin compositions differing in compounding ratios, it is necessary to derive the optimal melt bonding conditions each time.

The present invention was made in consideration of the above problem points and provides a method of connection of piping members made from a polyphenylene ether-based resin composition which establishes melt bonding conditions able to handle changes in the compounding ratio in the polyphenylene ether-based resin composition, is free of melt bonding defects, and is high in reliability and piping members made from a polyphenylene ether-based resin composition connected by this connection method.

Solution to Problem

To solve the above problem, the present invention provides a method of connection of piping members made from a polyphenylene ether-based resin composition which connects a pipe part and a mouth part of piping members made from a polyphenylene ether-based resin composition obtained by molding a polyphenylene ether-based resin composition, wherein the piping members made from a polyphenylene ether-based resin composition are comprised of a polyphenylene ether-based resin composition which has a polyphenylene ether-based resin in "a" parts by mass and a polystyrene-based resin in "b" parts by mass as essential ingredients, has the "a" and "b" satisfying the relationships of a+b=100 and a:b=(10 to 90): (90 to 10), and has a melt flow rate after kneading of 1.0 to 10.0 g/10 min, comprising heating and melting an outer circumferences of the pipe part and an inner circumferences of the mouth part of the piping members made from a polyphenylene ether-based resin composition by a heating temperature H(°C) of H=[220°C+ {100°C×("a" parts by mass/100 parts by mass)}]±10°C, then inserting the pipe part into the mouth part to melt bond them as a first characterizing feature and, furthermore, wherein the "a" and "b" satisfy the relationships of a+b=100 and a:b=(40 to 60):(60 to 40) as a second characterizing feature.

Furthermore, the invention provides a method wherein a heating time T (seconds) when heating and melting a pipe part and mouth part of the piping members made from a polyphenylene ether-based resin composition is, with respect to the wall thickness t (mm) of the piping member, 1.7×t+1<T<1.7×t+30, as a third characterizing feature and wherein a pipe part and mouth part of the piping members made from a polyphenylene ether-based resin composition satisfies the relationships of 0.2D+4<L<0.4D+60 and 15<D<225 when the pipe part has an outside diameter of D (mm) and the mouth part has a melt bonded part length of L (mm) as a fourth characterizing feature.

The invention provides piping members made from a polyphenylene ether-based resin composition connected by the connection method as a fifth characterizing feature and piping members wherein the piping members are any of pipes, fittings, and valves as a sixth characterizing feature.

Here, in the present invention, the "heating temperature" means the temperature for making the piping members made from a polyphenylene ether-based resin composition melt and is a temperature the same as or of the same extent as the actually measured temperature of the heater. Further, the "heating time" is the time counted from the time when inserting the mouth part and pipe part into a heated heater to when taking out the mouth part and pipe part from the heater.

A polyphenylene ether-based resin composition, when heated, relatively quickly softens near the heated part in addition to the heated surface, so hot bonding, which places a load near the heated part, is not suitable. To give a connection having a sufficient function as a piping member and high in reliability, among the methods of hot bonding connected parts, the method of heating and melting the outer circumference of the pipe part and the inner circumference of the mouth part and then inserting the pipe part into the mouth part for connection by melt bonding is the most suitable.

A polyphenylene ether-based resin has a large mechanical strength and elasticity, but is poor in fluidity, so molding is not possible with just a polyphenylene ether-based resin. For this reason, for molding, it is necessary to blend another resin so as to improve the fluidity. The resin used for this blending has to have properties required as a piping member (tensile strength, Izod impact test, stress crack resistance to chemicals, price, etc.) with a good balance, so has to be a polystyrene-based resin.

Further, in the present invention, the polyphenylene ether-based resin composition must have an MFR of 1.0 to 10.0 g/10 min. This has a fluidity of the resin composition required for molding the piping members made from a polyphenylene ether-based resin composition, in particular gives a good productivity for molding a thick wall piping member. To enable heating and melting by a heater, 1.0 g/10 min or more is sufficient. To suppress warping due to uneven thickness of the pipe in pipe formation and draw down of the resin composition and secure good stress crack resistance against a chemical flowing through the pipe, 10.0 g/10 min or less is sufficient.

When kneading a polyphenylene ether-based resin in "a" parts by mass and a polystyrene-based resin in "b" parts by mass and the obtained polyphenylene ether-based resin composition (a+b) is 100 parts by mass, to secure the fluidity of the resin composition required for molding, it is necessary that the polyphenylene ether-based resin be 90 parts by mass or less and that the polystyrene-based resin be 10 parts by mass or more. To express heat resistance and other physical properties, it is necessary that the polyphenylene ether-based resin be 10 parts by mass or more and that the polystyrene-based resin be 90 parts by mass or less. Due to this, when a+b=100, a:b=(10 to 90):(90 to 10) is preferred.

Further, the piping members made from a polyphenylene ether-based resin composition have to satisfy the properties required for high temperature-use piping members in the fields in which they are expected to be used. The compounding ratio of the polyphenylene ether-based resin and the polystyrene-based resin, in order to improve the impact strength and improve the fluidity so as to improve the moldability, should be one of a polyphenylene ether-based resin of 60 parts by mass or less and a polystyrene-based resin of 40 parts by mass or more, while in order to give a good high temperature creep characteristic, suppress a drop in mechanical strength, and maintain the heat resistance, should be one of a polyphenylene ether-based resin of 40 parts by mass or more and a polystyrene-based resin of 60 parts by mass or less. Due to this, when (a+b)=100, (a:b)=(40 to 60):(60 to 40) is more preferable.

Note that, the polyphenylene ether-based resin composition which is used is a blend of a polyphenylene ether-based resin and a polystyrene-based resin. Further, the polyphenylene ether-based resin composition comprised of the polyphenylene ether-based resin and the polystyrene-based resin blended together, as 100 parts by mass, may have blended into it, as an additive, a polyphenylene ether-based resin and a polystyrene-based resin graft copolymerized together. By adding a graft copolymerized polyphenylene ether-based resin composition, a good workability and long-term physical properties can be obtained. Note that, when a polyphenylene ether-based resin and a polystyrene-based resin graft copolymerized together are added as an additive, the "polyphenylene ether-based resin in 'a' parts by mass" and the "polystyrene-based resin in 'b' parts by mass" mean the total amounts of the resins, regardless of blending or graft copolymerization, as "a" parts by mass and "b" parts by mass. Further, the amount of addition of the graft copolymerized polyphenylene ether-based resin composition need only be of an extent by which the polyphenylene ether-based resin composition does not change in physical properties. Within 5 parts by mass is preferable.

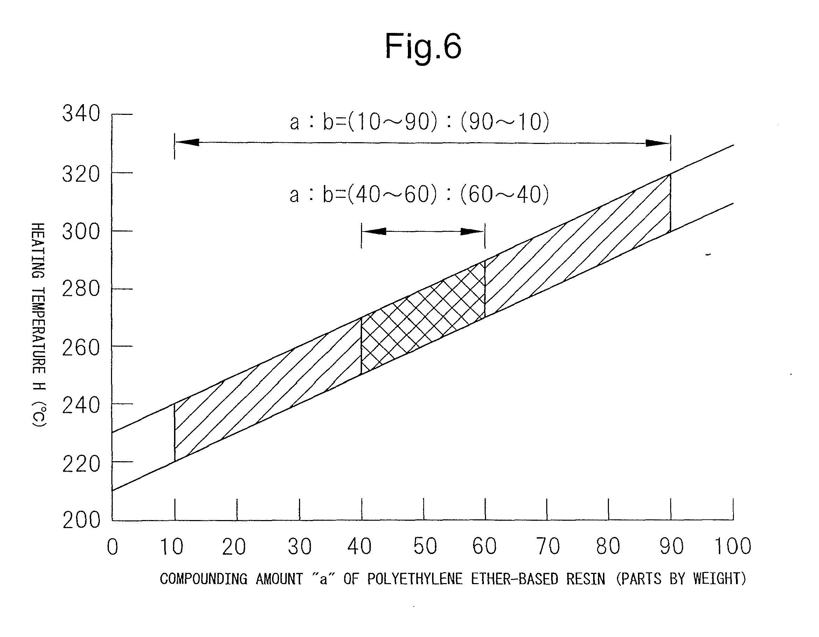

The polyphenylene ether-based resin composition used in the present invention is a polymer alloy of different resins of a polyphenylene ether-based resin and a polystyrene-based resin. The melt temperature of a polyphenylene ether-based resin is higher than the melt temperature of a polystyrene-based resin, so the melt temperature shifts to the high temperature side depending on the amount of the polyphenylene ether-based resin blended. Each time the compounding ratio of the polyphenylene ether-based resin increases by 10 parts by mass, the melt temperature shifts 10°C each to the high temperature side. Also, the general injection molding temperature of a polystyrene-based resin is 220°C. Therefore, the heating temperature H (°C), when the compounding ratio of the polyphenylene ether-based resin is "a" parts by mass, is expressed by the relationship $H=[220°C+(100°C\times("a"$ parts by mass/100 parts by mass)}]. Further, suitable melt bonding may be performed in the range of $\pm10°C$ of the heating temperature derived by this relationship as a standard. Therefore, to connect piping members made of a polyphenylene ether-based resin composition by melt bonding so as to withstand long term use and not leak or crack in a tough usage environment where a high temperature chemical is the main fluid transported, the heating temperature H (°C) is preferably set to a range of a relationship of $H=[220°C+{100°C\times("a"$ parts by mass/100 parts by mass)}]$\pm10°C$. Further, if expressing this relationship by a drawing, this is expressed as shown in FIG. 6. The region shown by hatching in the range of the relationship between the lines is the range of (a:b)=(10 to 90):(90 to 10) and (a:b)=(40 to 60):(60 to 40).

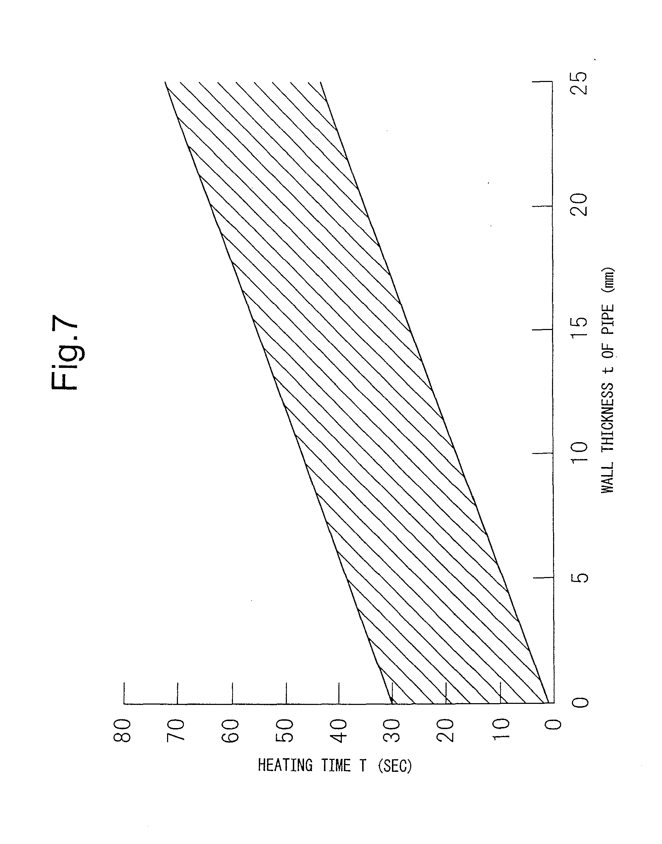

The heating time when heating and melting the pipe part and mouth part of the piping members made from a polyphenylene ether-based resin composition in the present invention has to be set that that the melt bonded parts of the outer circumference of the pipe part and the inner circumference of the mouth part become a good molten state and do not overly melt. The heating time can be set in accordance with the wall thickness t (mm) of the pipe part. Therefore, the heating time should be 1.7t+1(sec) or more so that piping withstands long term use and is free from leakage and cracks in a tough usage environment where a high temperature chemical is the main fluid transported. Further, to prevent the pipe from deforming and the cross-sectional flow area from being reduced when inserting the pipe part in the mouth in a molten state, it should be not more than 1.7t+30(sec). Further, if expressing this relationship by a drawing, this is expressed as shown in FIG. 7. The region shown by hatching between the lines is the range of the relationship. Further, for stable hot bonding without requiring skill, the heating time T (sec) is more preferably 1.7t+3(sec)<T<1.7t+15(sec). Note that, this numerical range suitably acts when the outside diameter D (mm) of the pipe part is 15<D<225. The wall thickness t (mm) at this time is preferably 1.5<t<22.

Here, the inside diameter of the mouth of the mouth part is preferably in the range of 94% to 105% of the pipe outside diameter, more preferably is in the range of 100% to 105%. This is because at least 94% of the outside diameter of the mouth part before heating is preferable so that the inside diameter of the mouth part becomes 100% or more of the outside diameter of the pipe part when subtracting the part which softens at the surface due to heating of the outer circumference of the pipe part and the inner circumference of the mouth part to melt (part becoming the bead), while not more than 105% is preferable for enabling reliable pushing at the time of insertion without providing more than the necessary clearance between the molten pipe part and mouth part. A taper is provided so that the inner circumference of the mouth part gradually is reduced toward the deep part. In the connection of piping members made from a polyphenylene ether-based resin composition, when inserting the pipe part in the mouth part, the mouth part is made larger than the pipe part so as to not apply any load near the heated part of the pipe part. 100% or more is more preferable so as to make the outer circumference of the pipe part abut against the taper part of the inner circumference of the mouth part for connection at the time of insertion.

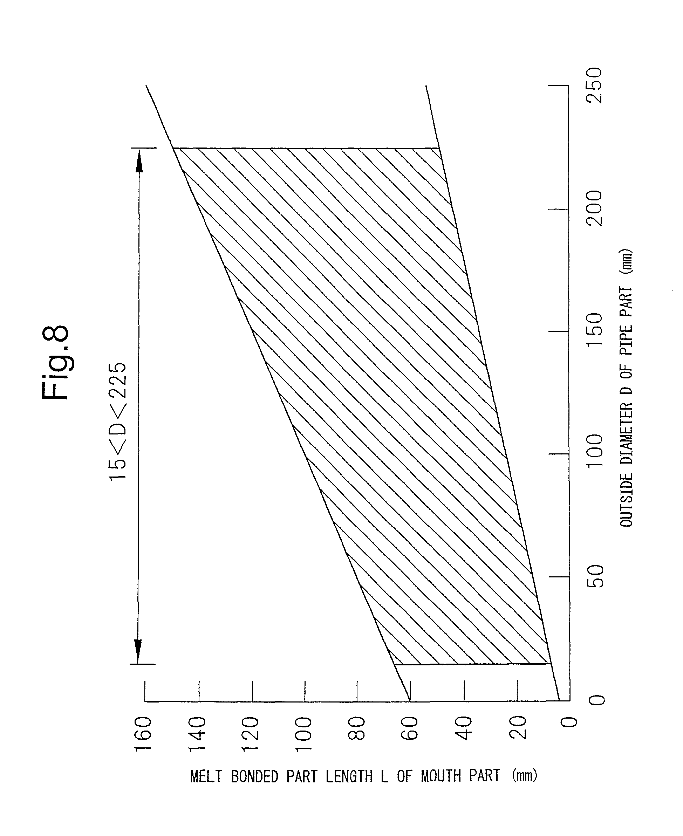

In the method of connecting the pipe part and mouth part of piping members made from polyphenylene ether-based resin composition, the melt bonded part obtained by heating and melting the outer circumference of the pipe part and the inner circumference of the mouth part, inserting the pipe part into the mouth part, and joining them by melt bonding is susceptible to concentration of stress occurring in the piping due to the change of the cross-sectional shape of the connected part. Due to the thermal stress caused when transporting a high temperature chemical after installation of the piping, a bending stress acts on the melt bonded part or a high internal pressure is applied, whereby tensile stress sometimes acts on the melt bonded part, so it is necessary to make the melt bonded part a length able to withstand these. To secure strength enough to sufficiently withstand the stresses acting on the melt bonded part, the area of the melt bonded part should be made sufficient with respect to the cross-sectional area of the pipe based on the outside diameter D (mm) of the pipe. A length of the melt bonded part of the mouth part is preferably at least 0.2D+4. Further, when inserting the pipe part into the mouth part, to enable reliable insertion to the end while maintaining the melted state and prevent deformation of the pipe part and reduction of the flow path at the time of insertion, the length of the melt bonded part of the mouth part is preferably within 0.4D+60. Note that, this numerical range suitably acts when the outside diameter D (mm) of the pipe part is 15<D<225. Further, if expressing this relationship by a drawing, this is expressed as shown in FIG. 8. The region shown by hatching in the range of the relationship between the lines is the range where the outside diameter D (mm) of the pipe part is 15<D<225.

Further, when the inside diameter of the mouth of the mouth part is 94% to less than 100% of the pipe outside diameter, for smooth insertion of the pipe part of the piping members made from a polyphenylene ether-based resin composition to the mouth part, the length L (mm) of the melt bonded part of the mouth part is more preferably $0.4D+10<L<0.4D+40$. When the inside diameter of the mouth of the mouth part is 100% to 105% of the pipe outside diameter, to obtain a sufficient strength at the part obtained by making the outer circumference of the pipe part abut against the taper part of the inner circumference of the mouth part and join it by melt bonding, the length L (mm) of the melt bonded part of the mouth part is more preferably $0.2D+6<L<0.2D+30$.

The angle of the taper of the mouth part is preferably in a range of 0.1° to 2.5°with respect to the axis of the mouth part, more preferably is in a range of 0.7° to 2.0°. This is because 0.1° or more is necessary so as to press bond the melted outer circumference of the pipe part and the melted inner circumference of the mouth part and obtain a high strength of the melt bonded part when heating the outer circumference of the pipe part and the inner circumference of the mouth part to melt and then inserting the pipe part in the mouth part. Further, not more than 2.5° is necessary so as to suppress resistance to insertion so as to enable smooth insertion into the deep part when inserting the insertion part 4 into the mouth part 2.

As the polyphenylene ether-based resin of the present invention, any known one can be used without particular limitation. It may be a homopolymer or a copolymer. A poly(2,6-dimethyl-1,4-phenylene)ether, poly(2-methyl-6-ethyl-1,4-phenylene)ether, poly(2,6-diethyl-1,4-phenylene)ether, poly(2-ethyl-6-n-propyl-1,4-phenylene)ether, poly(2,6-di-n-propyl-1,4-phenylene)ether, poly(2-methyl-6-n-butyl-1,4-phenylene)ether, poly(2-ethyl-6-isopropyl-1,4-phenylene)ether, poly(2-methyl-6-chloroethyl-1,4-phenylene)ether, poly(2-methyl-6-hydroxyethyl-1,4-phenylene)ether, poly(2-methyl-6-chloroethyl-1,4-phenylene)ether, poly(2,6-dimethoxy-1,4-phenylene)ether, poly(2,6-dichloromethyl-1,4-phenylene)ether, poly(2,6-dibromomethyl-1,4-phenylene)ether, poly(2,6-diphenyl-1,4-phenylene)ether, poly(2,6-ditolyl-1,4-phenylene)ether, poly(26-dichloro-1,4-phenylene)ether, poly(2,6-dibenzyl-1,4-phenylene)ether, poly(2,5-dimethyl-1,4-phenylene)ether, etc. may be mentioned.

As the polystyrene-based resin used in the polyphenylene ether-based resin composition of the present invention, a homopolymer of styrene and a styrene derivative, for example, polystyrene, a rubber-modified polystyrene (high impact polystyrene), syndiotatic polystyrene etc. may be mentioned. Furthermore, a styrene-based copolymer, for example, a styreneacrylonitrile copolymer (AS resin), styreneacrylonitrile-butadiene copolymer (ABS resin), etc. may be mentioned. Among these, from the viewpoint of a good compatibility and improved impact strength, a high impact polystyrene is preferably used.

Further, so long as the polyphenylene ether-based resin composition of the present invention is in the allowable range of properties sought as a piping member, the polyphenylene ether-based resin composition may include another polymer or inorganic additive. As the other polymer, a styrene-butadiene-based rubber may be mentioned. The impact strength can be improved while maintaining a high temperature creep characteristic. As the inorganic additive, glass fiber etc. may be mentioned. The strength and the rigidity can be improved. Further, the polyphenylene ether-based resin composition of the present invention may, in accordance with need, have an antioxidant, UV absorber, optical stabilizer, or other stabilizer blended into it. Due to the blending of these, it is possible to improve the heat stability and light resistance of the composition. The above additives may be mixed in a range not causing a drop in the properties required as a piping member. The total of the additives should be within 5 parts by mass with respect to the polyphenylene ether-based resin composition as 100 parts by mass.

The piping member using the polypropylene ether-based resin composition of the present invention is particularly a pipe, fitting, or valve. The method of molding it is not particularly limited. A pipe or multilayer pipe produced by extrusion, a socket, elbow, cheese, flange, or valve produced by injection molding, vacuum/pressure molding, etc. may be mentioned. Advantageous Effects of Invention

The present invention is structured as explained above and gives the following superior effects.

(1) It is possible to obtain a suitable heating temperature for each compounding ratio of a piping member made from a polyphenylene ether-based resin composition having a compounding ratio of the polyphenylene ether-based resin composition of a polyphenylene ether-based resin of 10 to 90 parts by mass and a polystyrene-based resin of 90 to 10 parts by mass and an MFR after kneading of 1.0 to 10.0 g/10 min, so no matter what kind of compounding ratio of a polyphenylene ether-based resin composition of a piping member is used, it is possible to stably perform hot bonding of a tensile strength and cross-sectional flow area of the same extent as that of the pipe.

(2) By making the polyphenylene ether-based resin 40 to 60 parts by mass and the polystyrene-based resin 60 to 40 parts by mass, it is possible to provide a piping member made from a polyphenylene ether-based resin composition having an impact strength, tensile strength, high temperature creep characteristic, and other physical properties in a good range in a good balance.

(3) It is possible to obtain a suitable heating time for each wall thickness of the piping member made of a polyphenylene ether-based resin composition, so it is possible to stably perform hot bonding of a tensile strength and cross-sectional flow area of the same extent as that of the pipe.

(4) It is possible to obtain a suitable length of the melt bonded part for each outside diameter D (mm) of the pipe part of the pipe, so it is possible to give a sufficient strength with respect to thermal stress and bending stress and enable insertion of the pipe part into the mouth part without deformation of the pipe part.

Brief Description of Drawings

FIG. 1 is a longitudinal cross-sectional view of a pipe and a socket shaped fitting.
FIG. 2 is a partial longitudinal cross-sectional view showing the state of heating a heater when connecting a pipe and fitting by melt bonding.
FIG. 3 is a partial longitudinal cross-sectional view showing the state of heating and melting a pipe and fitting by a heater.
FIG. 4 is a longitudinal cross-sectional view showing the state of connecting a pipe and fitting heated to melt.
FIG. 5 is a longitudinal cross-sectional view showing a pipe and fitting integrally connected by hot bonding.
FIG. 6 is a graph showing the relationship between the compounding ratio of the polyphenylene ether-based resin and the heating temperature.
FIG. 7 is a graph showing the relationship between the wall thickness of the pipe part of the piping member and the heating time.
FIG. 8 is a graph showing the relationship between the outside diameter of the pipe part of the piping member and the length of the melt bonded part of the mouth part.

Description of Embodiments

Below, embodiments of the present invention will be explained with reference to the drawings, but the present invention is not limited to the embodiments needless to say.

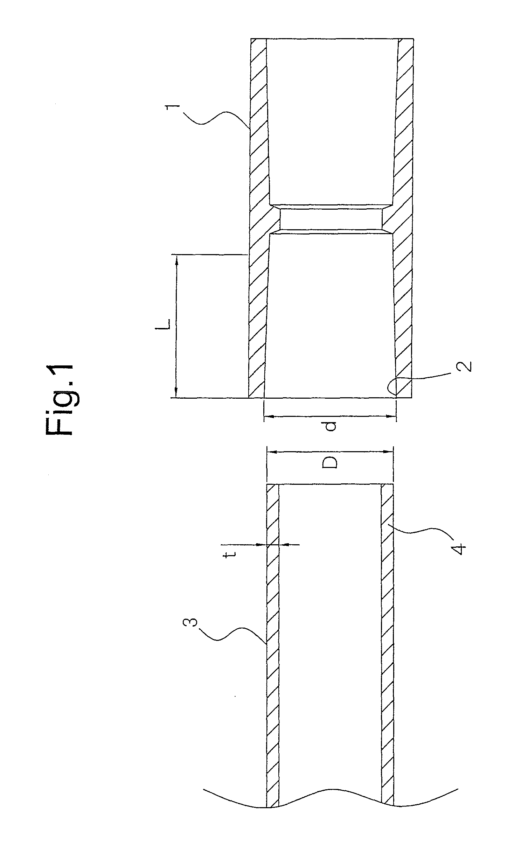

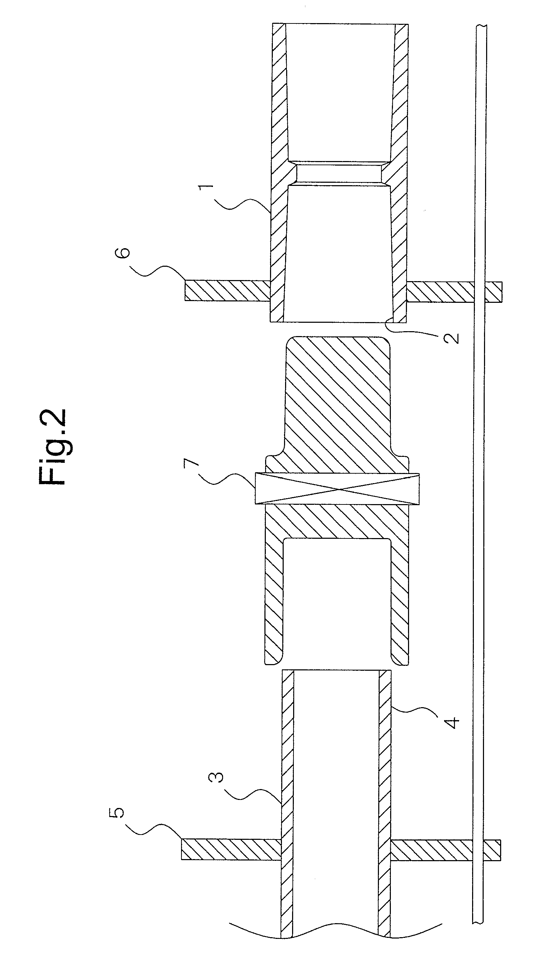

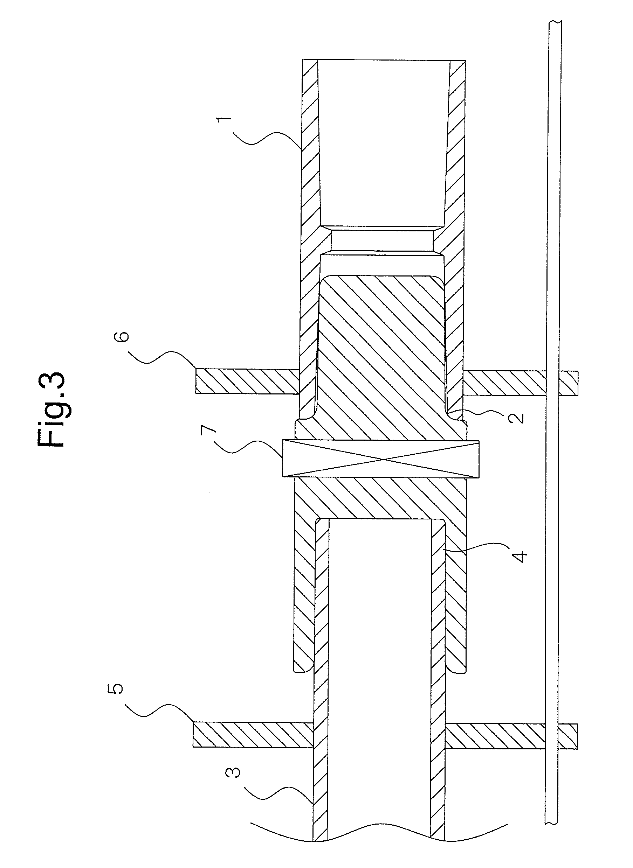

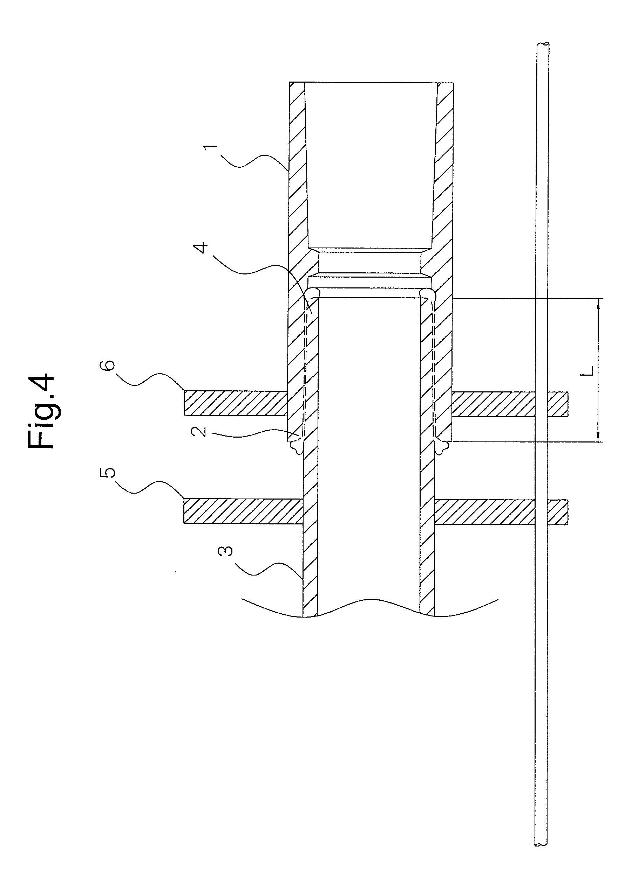

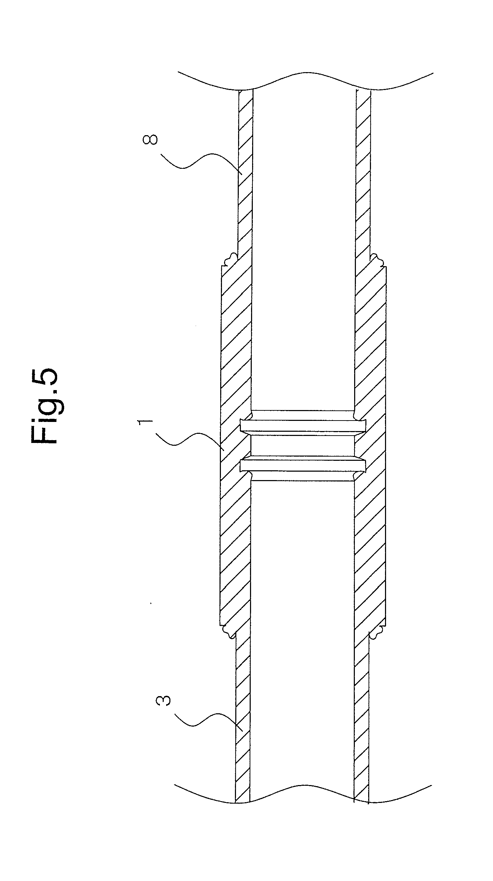

FIG. 1 is a longitudinal cross-sectional view of a pipe and a socket shaped fitting, FIG. 2 is a partial longitudinal cross-sectional view showing the state of heating a heater when connecting a pipe and fitting by melt bonding, FIG. 3 is a partial longitudinal cross-sectional view showing the state of heating and melting a pipe and fitting by a heater, FIG. 4 is a longitudinal cross-sectional view showing the state of connecting a pipe and fitting heated to melt, and FIG. 5 is a longitudinal cross-sectional view showing a pipe and fitting integrally connected by hot bonding.
Below, based on FIG. 1, a fitting made of a polyphenylene ether-based resin composition of a socket shape of an embodiment of the present invention will be explained.
In the figure, a fitting 1 and pipe 3 is molded from a polyphenylene ether-based resin composition comprised of a polyphenylene ether-based resin in 50 parts by mass and a high impact polystyrene in 50 parts by mass. Further, a fitting 1 is a fitting of a socket shape to be connected by melt bonding with a pipe 3 having an outside diameter D (mm) of a pipe part 4 of 32 mm.
A mouth part 2 is provided at inner circumference of each of the two ends of the fitting 1. The inside diameter d (mm) of the mouth part is 32.5 mm. The piece is provided so as be reduced in diameter by a taper of a slant of 0.028° toward the deep part.
Note that, in the present example, a pipe 3 is mentioned as a piping member to be inserted into the fitting 1, but the member is not particularly limited so long as having a pipe part 4 to be joined by melt bonding with the mouth part 2. It may be a reducer shaped or other fitting, valve, etc. Further, as the piping member into which the pipe 3 is inserted, a socket shaped fitting 1 may be mentioned. The member is not particularly limited so long as having a mouth part 2 to be joined by melt bonding with the pipe part 4. It may be a pipe having a mouth etc., an elbow shaped, cheese shaped, or other fitting, a valve, etc.
Next, the action when connecting by melt bonding the socket shaped fitting 1 and pipe 3 of the Example using a melt bonder will be explained with reference to FIG. 2 to FIG. 5.
First, as shown in FIG. 2, the fitting 1 is set in one clamp 6 of the melt bonder and the pipe 3 is set in the other clamp 5. Next, as shown in FIG. 3, the outer circumference of the pipe part 4 of the pipe 3 and the inner circumference of the mouth part 2 of the fitting 1 are heated by a heater 7 under conditions of a heating temperature of 270°C and a heating time of 12 seconds. After heating the fitting 1 and pipe 3 to melt for a certain time, the fitting 1 and the pipe 3 are separated from the heater 7. After the elapse of a certain time, the pipe part 4 of the pipe 3 is inserted to the mouth part 2 of the fitting 1 to give a length of the melt bonded part of 35 mm. Here, the length L (mm) of the melt bonded part is the length between the end face of the pipe part 4 and the end face of the mouth part 2 when heating the outer circumference of the pipe part 4 and the inner circumference of the mouth part 2 to melt and inserting the pipe part 4 into the mouth part 2 for joining them by melt bonding (see FIG. 4).
After inserting the pipe 3 into the fitting 1, the members are kept in that fastened state for a certain time (see FIG. 4) and cooled, then the pipe 3 and the fitting 1 are removed from the clamp 5 and the clamp 6 whereby the work of connection by melt bonding is completed. Further, when connecting a pipe 8 to the other mouth part of the fitting 1 as well, a similar method may be used for connection by melt bonding (state of FIG. 5).

Next, the method of connecting piping members made of a polyphenylene ether-based resin composition of the present invention and piping members made from a polyphenylene ether-based resin composition were evaluated for performance by the test methods shown below. The content of the evaluation was evaluation of pipes formed by extrusion from polyphenylene ether-based resin compositions of different compounding ratios or MFRs and evaluation of a pipe and injection molded fitting heated for melt bonding (below, referred to as a "melt bonded member").

(1) Tensile test of pipe

Referring to JIS K7161, a pipe made of the polyphenylene ether-based resin composition was measured for tensile strength in an atmosphere of $23\pm1°C$ at a test speed of 10 mm/min.

(2) Tensile test of melt bonded member

Referring to JIS K7161, a melt bonded member of a pipe and fitting made of the polyphenylene ether-based resin composition was measured for tensile strength in an atmosphere of $23\pm1°C$ at a test speed of 10 mm/min.

(3) Evaluation of cross-sectional flow area after melt bonding

A pipe and fitting made of the polyphenylene ether-based resin composition were heated to melt bond and the fitting part of the melt bonded member was measured for cross-sectional flow area so as to evaluate the cross-sectional flow area. A cross-sectional flow area of the fitting of the melt bonded member of 100 to 90% of the cross-sectional flow area of the pipe before heating for melt bonding was evaluated as "V. good", 89 to 80% as "Good", and less than 80% as "Fair".

(4) Measurement of MFR

Based on JIS K7210, the MFR of the polyphenylene ether-based resin composition was measured under conditions of a test temperature of 250°C and a test load of 10 kg.

(5) Notched Izod impact test

Based on JIS K7110, a notched Izod impact test piece was cut out from a pipe made of a polyphenylene ether-based resin composition and the Izod impact strength was measured in a $23\pm1°C$ atmosphere.

(6) Stress crack test

Referring to JIS K7108, a stress crack test piece (thickness 2 mm, width 10 mm, and length 50 mm) was cut out from a pipe made of a polyphenylene ether-based resin composition and a constant stress (30 MPa) was applied. In that state, the test piece was immersed in 23°C, 87 wt% sulfuric acid for 56 days to visually confirm if cracks occurred in the surface of the test piece.

In the present invention, as the minimum necessary conditions for a piping member made of a polyphenylene ether-based resin composition, the tensile strength of the pipe has to be at least 40 MPa so that the pipe does not easily crack due to internal pressure applied to it, the Izod impact strength has to be at least 7 kJ/$m^2$ so that the piping member does not easily crack, and there must be stress crack resistance against chemicals.

Further, for the melt bonded member of the pipe and fitting made of the polyphenylene ether-based resin composition to have a good high temperature creep characteristic, the melt bonded member must have a tensile strength of a similar extent as the tensile strength of the pipe alone. The melt bonded member preferably has a cross-sectional flow area of the fitting part of 100 to 90% of the cross-sectional flow area of the pipe before heating for melt bonding.

Test Example 1

First, a test was run to confirm the effect of the MFR after kneading on the impact strength and stress crack resistance of a piping member made from a polyphenylene ether-based resin composition.

Example 1

Polyphenylene ether-based resins of different molecular weights were designated as polyphenylene ether-based resins A, B, and C. The polyphenylene ether-based resins in 50 parts by mass and a polystyrene-based resin of a high impact polystyrene in 50 parts by mass were blended, kneaded by a twin-screw extruder, and pelletized to produce polyphenylene ether resin compositions of an MFR after kneading of 4.5 g/10 min, 8.5 g/10 min, and 11 g/10 min. A sample with an MFR after kneading of the obtained resin composition of 4.5 g/10 min was designated as Example 1-1, a sample of 8.5 g/10 min was designated as Example 1-2, and a sample of 11 g/10 min was designated as Comparative Example 1. A single screw extruder was used at a cylinder temperature of 250°C to form a pipe of a wall thickness of 3.5 mm, an outside diameter of 32 mm, and a polyphenylene ether resin composition. A test piece for an Izod impact test and a test piece for a stress crack test were cut out and subjected to an Izod impact test and stress crack test. The results of the tests are shown in Table 1.

Table 1

| Item | | | Example 1-1 | Example 1-2 | Comp. Ex. 1 |
|---|---|---|---|---|---|
| Composition of formulation (parts by mass) | Polyphenylene ether resin A | % | 50 | - | - |
| | Polyphenylene ether resin B | % | - | 50 | - |
| | Polyphenylene ether resin C | % | - | - | 50 |
| | High impact polystyrene | % | 50 | 50 | 50 |
| | MFR after kneading | g/10 min | 4.5 | 8.5 | 11 |
| Evaluation of composition | Izod impact strength | kJ/m$^2$ | 9 | 8.5 | 8 |
| | Stress crackability (after 56 days immersion in chemical) | | No cracks | No cracks | Cracks |

From Table 1, comparing Example 1-1, Example 1-2, and Comparative Example 1, even if the compounding ratios of the polyphenylene ether-based resin and the polystyrene-based resin of a high impact polystyrene are the same, the MFRs after kneading are different, so it is learned that both the Izod impact strength and the stress crack resistance with respect to chemicals change.
Regarding the Izod impact strength, in all of Example 1-1, Example 1-2, and Comparative Example 1, there is a strength of at least 7 kJ/m$^2$, that is, the minimum necessary value for a piping member is satisfied, but as the MFR becomes larger, it was confirmed that the Izod impact strength tends to fall.
Further, regarding the stress crack resistance with respect to chemicals, at the MFR of Example 1-1 and Example 1-2, no change is seen in the stress crack resistance, but at the MFR of Comparative Example 1, some cracks occurred in the stress crack test. This is because if the MFR becomes larger, the polyphenylene ether-based resin composition becomes smaller in molecular weight, the chemical penetrates it more easily, and there is greater susceptibility to the effects of stress, so the stress crack resistance with respect to chemicals falls. From this, in a piping member made of a polyphenylene ether resin composition, to satisfy the chemical resistance performance as a piping member, the polyphenylene ether-based resin composition after kneading preferably has an MFR of 1.0 to 10.0 g/10 min.

Test Example 2

Next, a test was run to confirm the relationship between the compounding ratio of the polyphenylene ether-based resin composition and the heating temperature.

Example 2

A polyphenylene ether-based resin in 30 parts by mass (polyphenylene ether-based resin A used in Example 1) and a polystyrene-based resin of a high impact polystyrene in 70 parts by mass were blended and pelletized to produce a polyphenylene ether-based resin composition having an MFR of 4.5 g/10 min. The obtained resin composition was used in the same way as Example 1 to mold a pipe for a polyphenylene ether-based resin composition, an injection molding machine was used to mold a socket shaped fitting having an inside diameter d (mm) of the mouth of 32.5 mm, and the pipe and fitting were connected by melt bonding under conditions of a heating temperature of 230°C, 240°C, 250°C, 260°C, or 270°C and a heating time of 12 seconds. The sample of the heating temperature 230°C was designated as Comparative Example 2-1, the sample of 240°C was designated as Example 2-1, the sample of 250°C was designated as Example 2-2, the sample of 260°C was designated as Example 2-3, and the sample of 270°C was designated as Comparative Example 2-2 for a tensile test of the melt bonded member and evaluation of the appearance. Note that, as a comparative example, a tensile test was conducted on only the pipe. The results of the tests are shown in Table 2.

Example 3

A polyphenylene ether-based resin in 40 parts by mass (polyphenylene ether-based resin A used in Example 1) and a polystyrene-based resin of a high impact polystyrene in 60 parts by mass were blended and pelletized to produce a polyphenylene ether-based resin composition having an MFR of 4.5 g/10 min. The obtained resin composition was used in the same way as Example 2 so as to form a pipe and fitting, then the pipe and fitting were connected by melt bonding under melt bonding conditions of a heating temperature of 240°C, 250°C, 260°C, 270°C, or 280°C and a heating time of 12 seconds. The sample of the heating temperature 240°C was designated as Comparative Example 3-1, the sample of 250°C was designated as Example 3-1, the sample of 260°C was designated as Example 3-2, the sample of 270°C was designated as Example 3-3, and the sample of 280°C was designated as Comparative Example 3-2 for a tensile test of the melt bonded member and evaluation of the appearance. Note that, as a comparative example, a tensile test was conducted on only the pipe. The results of the tests are shown in Table 2.

Example 4

A polyphenylene ether-based resin in 50 parts by mass (polyphenylene ether-based resin A used in Example 1) and a polystyrene-based resin, that is, high impact polystyrene, in 50 parts by mass were blended and pelletized to produce a polyphenylene ether-based resin composition having an MFR of 4.5 g/10 min. The obtained resin composition was used in the same way as Example 2 so as to form a pipe and fitting, then the pipe and fitting were connected by melt bonding under melt bonding conditions of a heating temperature of 250°C, 260°C, 270°C, 280°C, and 290°C and a heating time of 12 seconds. The sample of the heating temperature 250°C was designated as Comparative Example 4-1, the sample of 260°C was designated as Example 4-1, the sample of 270°C was designated as Example 4-2, the sample of 280°C was designated as Example 4-3, and the sample of 290°C was designated as Comparative Example 4-2 for a tensile test of the melt bonded member and evaluation of the appearance. Note that, as a comparative example, a tensile test was conducted on only the pipe. The results of the tests are shown in Table 2.

Example 5

A polyphenylene ether-based resin in 60 parts by mass (polyphenylene ether-based resin A used in Example 1) and a polystyrene-based resin of a high impact polystyrene in 40 parts by mass were blended and pelletized to produce a polyphenylene ether-based resin composition having an MFR of 4.5 g/10 min. The obtained resin composition was used in the same way as Example 2 so as to form a pipe and fitting, then the pipe and fitting were connected by melt bonding under melt bonding conditions of a heating temperature 260°C, 270°C, 280°C, 290°C, or 300°C and a heating time of 12 seconds. The sample of the heating temperature 260°C was designated as Comparative Example 5-1, the sample of 270°C was designated as Example 5-1, the sample of 280°C was designated as Example 5-2, the sample of 290°C was designated as Example 5-3, and the sample of 300°C was designated as Comparative Example 5-2 for a tensile test of the melt bonded member and evaluation of the appearance. Note that, as a comparative example, a tensile test was conducted on only the pipe. The results of the tests are shown in Table 2.

Example 6

polyphenylene ether-based resin 70 parts by mass (polyphenylene ether-based resin A used in Example 1), high impact polystyrene of polystyrene-based resin 30 parts by mass were blended and pelletized to produce a polyphenylene ether-based resin composition having an MFR of 4.3 g/10 min. The obtained resin composition was used in the same way as Example 2 so as to form a pipe and fitting, then the pipe and fitting were connected by melt bonding under melt bonding conditions of a heating temperature 270°C, 280°C, 290°C, 300°C, or 310°C for 12 seconds. The sample of the heating temperature 270°C was designated as Comparative Example 6-1, the sample of 280°C was designated as Example 6-1, the sample of 290°C was designated as Example 6-2, the sample of 300°C was designated as Example 6-3, and the sample of 310°C was designated as Comparative Example 6-2 for a tensile test of the melt bonded member and evaluation of the appearance. Note that, as a comparative example, a tensile test was conducted on only the pipe.

The results of the tests are shown in Table 2.

Table 2

| Item | | | Comp. Ex. 2-1 | Ex. 2-1 | Ex. 2-2 | Ex. 2-3 | Comp. Ex. 2-2 |
|---|---|---|---|---|---|---|---|
| Composition of formulation High (parts by mass) | Polyphenylene ether resin | % | 30 | 30 | 30 | 30 | 30 |
| | High impact polystyrene | % | 70 | 70 | 70 | 70 | 70 |
| Melt bonding conditions | Heater temperature | °C | 230 | 240 | 250 | 260 | 270 |
| | Heating time | Sec | 12 | 12 | 12 | 12 | 12 |
| Evaluation of pipe | Tensile strength of pipe | MPa | 40 | 40 | 40 | 40 | 40 |
| Evaluation of melt bonded member | Tensile strength of melt bonded member | MPa | 29 | 37 | 39 | 39 | 39 |
| | Evaluation of cross-sectional flow area after melt bonding | % | V.good | V.good | V.good | V.good | Good |
| Item | | | Comp. Ex. 3-1 | Ex. 3-1 | Ex. 3-2 | Ex. 3-3 | Comp. Ex. 3-2 |
| Composition of formulation (parts by mass) | Polyphenylene ether resin | % | 40 | 40 | 40 | 40 | 40 |
| | High impact polystyrene | % | 60 | 60 | 60 | 60 | 60 |
| Melt bonding conditions | Heater temperature | °C | 240 | 250 | 260 | 270 | 280 |
| | Heating time | Sec | 12 | 12 | 12 | 12 | 12 |
| Evaluation of pipe | Tensile strength of pipe | MPa | 45 | 45 | 45 | 45 | 45 |
| Evaluation of melt bonded member | Tensile strength of melt bonded member | MPa | 36 | 40 | 43 | 43 | 43 |
| | Evaluation of cross-sectional flow area after melt bonding | % | V.good | V.good | V.good | V.good | Good |
| Item | | | Comp. Ex. 4-1 | Ex. 4-1 | Ex. 4-2 | Ex. 4-3 | Comp. Ex. 4-2 |
| Composition of formulation (parts by mass) | Polyphenylene ether resin | % | 50 | 50 | 50 | 50 | 50 |
| | High impact polystyrene | % | 50 | 50 | 50 | 50 | 50 |
| Melt bonding conditions | Heater temperature | °C | 250 | 260 | 270 | 280 | 290 |
| | Heating time | Sec | 12 | 12 | 12 | 12 | 12 |

(continued)

| Item | | | Comp. Ex. 4-1 | Ex. 4-1 | Ex. 4-2 | Ex. 4-3 | Comp. Ex. 4-2 |
|---|---|---|---|---|---|---|---|
| Evaluation of pipe | Tensile strength of pipe | MPa | 50 | 50 | 50 | 50 | 50 |
| Evaluation of melt bonded member | Tensile strength of melt bonded member | MPa | 39 | 48 | 49 | 49 | 48 |
| | Evaluation of cross-sectional flow area after melt bonding | % | V.good | V.good | V.good | V.good | Good |

| Item | | | Comp. Ex. 5-1 | Ex. 5-1 | Ex. 5-2 | Ex. 5-3 | Comp. Ex. 5-2 |
|---|---|---|---|---|---|---|---|
| Composition of formulation (parts by mass) | Polyphenylene ether resin | % | 60 | 60 | 60 | 60 | 60 |
| | High impact polystyrene | % | 40 | 40 | 40 | 40 | 40 |
| Melt bonding conditions | Heater temperature | °C | 260 | 270 | 280 | 290 | 300 |
| | Heating time | Sec | 12 | 12 | 12 | 12 | 12 |
| Evaluation of pipe | Tensile strength of pipe | MPa | 60 | 60 | 60 | 60 | 60 |
| Evaluation of melt bonded member | Tensile strength of melt bonded member | MPa | 51 | 56 | 58 | 59 | 59 |
| | Evaluation of cross-sectional flow area after melt bonding | % | V.good | V.good | V.good | V.good | Good |

| Item | | | Comp. Ex. 6-1 | Ex. 6-1 | Ex. 6-2 | Ex. 6-3 | Comp. Ex. 6-2 |
|---|---|---|---|---|---|---|---|
| Composition of formulation (parts by mass) | Polyphenylene ether resin | % | 70 | 70 | 70 | 70 | 70 |
| | High impact polystyrene | % | 30 | 30 | 30 | 30 | 30 |
| Melt bonding conditions | Heater temperature | °C | 270 | 280 | 290 | 300 | 310 |
| | Heating time | Sec | 12 | 12 | 12 | 12 | 12 |
| Evaluation of pipe | Tensile strength of pipe | MPa | 65 | 65 | 65 | 65 | 65 |
| Evaluation of melt bonded member | Tensile strength of melt bonded member | MPa | 56 | 63 | 64 | 64 | 64 |
| | Evaluation of cross-sectional flow area after melt bonding | % | V.good | V.good | V.good | V.good | Good |

From Table 2, if comparing Example 2-1 to Example 2-3 and Comparative Example 2-1 to Comparative Example 2-2, it was confirmed that in Comparative Example 2-1, the melt bonded member has a tensile strength lower compared with the tensile strength of the pipe alone, that is, about 70% of the tensile strength of the pipe alone, while in Example 2-1, Example 2-2, Example 2-3, and Comparative Example 2-2, the melt bonded members had tensile strengths of strengths of about the same extents as the tensile strengths of the pipes alone, that is, the pipe parts of the pipes and the mouth parts of the fittings were integrally joined by melt bonding. Further, it was confirmed that in Comparative Example 2-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 2-1, Example 2-2, Example 2-3, and Example 2-4, the melt bonded fittings had cross-sectional flow areas of areas of about the same extents as the cross-sectional flow areas of the pipes before hot bonding, that is, the cross-sectional flow areas were not reduced due to deformation of the beads or pipes.

From this, in a piping member made from a polyphenylene ether-based resin composition obtained by kneading a polyphenylene ether-based resin in 30 parts by mass and a high impact polystyrene in 70 parts by mass, if considering the physical properties required in the field in which the member is expected to be used, the heating temperature when hot bonding the pipe and fitting is preferably 240°C to 260°C, more preferably 250°C to 260°C.

From Table 2, if comparing Example 3-1 to Example 3-3 and Comparative Example 3-1 to Comparative Example 3-2, it was confirmed that in Comparative Example 3-1, the melt bonded member had a tensile strength lower compared with the tensile strength of the pipe alone, that is, about 80% of the tensile strength of the pipe alone, while in Example 3-1, Example 3-2, Example 3-3, and Comparative Example 3-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 3-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 3-1, Example 3-1, Example 3-2, and Example 3-3, the melt bonded fittings had cross-sectional flow areas of areas of about the same extents as the cross-sectional flow areas of the pipes before hot bonding, that is, the cross-sectional flow areas were not reduced due to deformation of the beads or pipes.

From this, in a piping member made from a polyphenylene ether-based resin composition obtained by kneading a polyphenylene ether-based resin in 40 parts by mass and a high impact polystyrene in 60 parts by mass, if considering the physical properties required in the field in which the member is expected to be used, the heating temperature when hot bonding the pipe and fitting is preferably 250°C to 270°C, more preferably 260°C to 270°C.

From Table 2, if comparing Example 4-1 to Example 4-3 and Comparative Example 4-1 to Comparative Example 4-2, it was confirmed that in Comparative Example 4-1, the melt bonded member had a tensile strength lower compared with the tensile strength of the pipe alone, that is, about 80% of the tensile strength of the pipe alone, while in Example 4-1, Example 4-2, Example 4-3, and Comparative Example 4-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 4-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 4-1, Example 4-1, Example 4-2, and Example 4-3, the melt bonded fittings had cross-sectional flow areas of areas of about the same extents as the cross-sectional flow areas of the pipes before hot bonding, that is, the cross-sectional flow areas were not reduced due to deformation of the beads or pipes.

From this, in a piping member made from a polyphenylene ether-based resin composition obtained by kneading a polyphenylene ether-based resin in 50 parts by mass and a high impact polystyrene in 50 parts by mass, if considering the physical properties required in the field in which the member is expected to be used, the heating temperature when hot bonding the pipe and fitting is preferably 260°C to 280°C, more preferably 270°C to 280°C.

From Table 2, if comparing Example 5-1 to Example 5-3 and Comparative Example 5-1 to Comparative Example 5-2, it was confirmed that in Comparative Example 5-1, the melt bonded member had a tensile strength lower compared with the tensile strength of the pipe alone, that is, about 85% of the tensile strength of the pipe alone, while in Example 5-1, Example 5-2, Example 5-3, and Comparative Example 5-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 5-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 5-1, Example 5-1, Example 5-2, and Example 5-3, the melt bonded fittings had cross-sectional flow areas of areas of about the same extents as the cross-sectional flow areas of the pipes before hot bonding, that is, the cross-sectional flow areas were not reduced due to deformation of the beads or pipes.

From this, in a piping member made from a polyphenylene ether-based resin composition obtained by kneading a polyphenylene ether-based resin in 60 parts by mass and a high impact polystyrene in 40 parts by mass, if considering the physical properties required in the field in which the member is expected to be used, the heating temperature when hot bonding the pipe and fitting is preferably 270°C to 290°C, more preferably 280°C to 290°C.

From Table 2, if comparing Example 6-1 to Example 6-3 and Comparative Example 6-1 to Comparative Example 6-2, it was confirmed that in Comparative Example 6-1, the melt bonded member had a tensile strength lower compared with the tensile strength of the pipe alone, that is, about 85% of the tensile strength of the pipe alone, while in Example 6-1, Example 6-2, Example 6-3, and Comparative Example 6-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 6-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 6-1, Example 6-1, Example 6-2, and Example 6-3, the melt bonded fittings had cross-sectional flow areas of areas of about the same extents as the cross-sectional flow areas of the pipes before hot bonding, that is, the cross-sectional flow areas were not reduced due to deformation of the beads or pipes.
From this, in a piping member made from a polyphenylene ether-based resin composition obtained by kneading a polyphenylene ether-based resin in 70 parts by mass and a high impact polystyrene in 70 parts by mass, if considering the physical properties required in the field in which the member is expected to be used, the heating temperature when hot bonding the pipe and fitting is preferably 280°C to 300°C, more preferably 290°C to 300°C.

From the above, from Example 2 to Example 6, it was confirmed that the heating temperature when hot bonding piping member made of a polyphenylene ether-based resin composition differs according to the compounding ratio of the polyphenylene ether-based resin and the high impact polystyrene and that the greater the compounding ratio of the polyphenylene ether-based resin, the more to the high temperature side the temperature is shifted. This is due to the melt temperature of a polyphenylene ether-based resin being higher than the melt temperature of a high impact polystyrene. Further, the more preferable heating temperature shifts 10°C each to the high temperature side with each increase of the compounding ratio of the polyphenylene ether-based resin by 10 parts by mass and the general injection molding temperature of a polystyrene-based resin is 220°C, so the heating temperature H(°C) is expressed by the relationship H=[220°C+{100°C×("a" parts by mass/100 parts by mass)}] when the compounding ratio of the polyphenylene ether-based resin is "a" parts by mass. Further, it is possible to perform suitable melt bonding even in a range of ±10°C of the heating temperature derived by this relationship, so the heating temperature H (°C) is expressed by the relationship H=[220°C+{100°C×("a" parts by mass/100 parts by mass)}]±10°C. The melt bonded member hot bonded at the heating temperature derived from this relationship has a tensile strength of the same extent as the pipe alone and a cross-sectional flow area of the same extent as the pipe before hot bonding.

Test Example 3

Next, a test was run to confirm the relationship between the wall thickness of piping members made from a polyphenylene ether-based resin composition and the heating time.

Example 7

A polyphenylene ether-based resin in 50 parts by mass (polyphenylene ether-based resin A used in Example 1) and a polystyrene-based resin of a high impact polystyrene in 50 parts by mass were blended and pelletized to produce a polyphenylene ether-based resin composition having an MFR of 4.5 g/10 min. The obtained resin composition was used in the same way as Example 2 so as to form a pipe and fitting, then the pipe and fitting were connected by melt bonding under melt bonding conditions of a heating temperature 270°C and a heating time of 5 seconds, 8 seconds, 12 seconds, 35 seconds, or 40 seconds. The sample of the heating time of 5 seconds was designated as Comparative Example 7-1, the sample of 8 seconds was designated as Example 7-1, the sample of 12 seconds was designated as Example 7-2, the sample of 35 seconds was designated as Example 7-3, and the sample of 40 seconds was designated as Comparative Example 7-2 for a tensile test of the melt bonded member and evaluation of the appearance. Note that, as a comparative example, a tensile test was conducted on only the pipe. The results of the tests are shown in Table 3. (Example 7-2 is same as Example 4-2.)

Example 8

A polyphenylene ether-based resin in 50 parts by mass (polyphenylene ether-based resin A used in Example 1) and a polystyrene-based resin of a high impact polystyrene in 50 parts by mass were blended and pelletized to produce a polyphenylene ether-based resin composition having an MFR of 4.5 g/10 min. The obtained resin composition was used with a single screw extruder at a cylinder temperature of 250°C so as to form a pipe of an outside diameter of 114 mm made by a polyphenylene ether-based resin composition, then was used with an injection molding machine to form a socket shaped fitting of a mouth inside diameter (d) of 114.7 mm, then the pipe and fitting were connected by melt bonding under melt bonding conditions of a heating temperature 270°C and a heating time of 10 seconds, 15 seconds, 20 seconds, 40 seconds, or 45 seconds. The sample of the heating time of 10 seconds was designated as Comparative Example 8-1, the sample of 15 seconds was designated as Example 8-1, the sample of 20 seconds was designated as Example 8-2, the sample of 40 seconds was designated as Example 8-3, and the sample of 45 seconds was designated as Comparative Example 8-2 for a tensile test of the melt bonded member and evaluation of the appearance. Note that, as a comparative example, a tensile test was conducted on only the pipe. The results of the tests are shown in Table 3.

Table 3

| Item | | | Comp. Ex. 7-1 | Ex. 7-1 | Ex. 7-2 | Ex. 7-3 | Comp. Ex. 7-2 |
|---|---|---|---|---|---|---|---|
| Composition of formulation (parts by mass) | Polyphenylene ether resin | % | 50 | 50 | 50 | 50 | 50 |
| | High impact polystyrene | % | 50 | 50 | 50 | 50 | 50 |
| Melt bonding conditions | Heater temperature | °C | 270 | 270 | 270 | 270 | 270 |
| | Heating time | Sec | 5 | 8 | 12 | 35 | 40 |
| | Pipe outside diameter | mm | 32 | 32 | 32 | 32 | 32 |
| | Wall thickness | mm | 3.5 | 3.5 | 3.5 | 3.5 | 3.5 |
| | Meld bonded part length | mm | 35 | 35 | 35 | 35 | 35 |
| Evaluation of pipe | Tensile strength of pipe | MPa | 50 | 50 | 50 | 50 | 50 |
| Evaluation of melt bonded member | Tensile strength of melt bonded member | MPa | 40 | 45 | 48 | 48 | 49 |
| | Evaluation of cross-sectional flow area after melt bonding | % | V.good | V.good | V.good | V.good | good |
| Item | | | Comp. Ex. 8-1 | Ex. 8-1 | Ex. 8-2 | Ex. 8-3 | Comp. Ex. 8-2 |
| Composition of formulation (parts by mass) | Polyphenylene ether resin | % | 50 | 50 | 50 | 50 | 50 |
| | High impact polystyrene | % | 50 | 50 | 50 | 50 | 50 |
| Melt bonding conditions | Heater temperature | °C | 270 | 270 | 270 | 270 | 270 |
| | Heating time | Sec | 10 | 15 | 20 | 40 | 45 |
| | Pipe outside diameter | mm | 114 | 114 | 114 | 114 | 114 |
| | Wall thickness | mm | 7.1 | 7.1 | 7.1 | 7.1 | 7.1 |
| | Meld bonded part length | mm | 70 | 70 | 70 | 70 | 70 |
| Evaluation of pipe | Tensile strength of pipe | MPa | 50 | 50 | 50 | 50 | 50 |

(continued)

| Item | | | Comp. Ex. 8-1 | Ex. 8-1 | Ex. 8-2 | Ex. 8-3 | Comp. Ex. 8-2 |
|---|---|---|---|---|---|---|---|
| Evaluation of melt bonded member | Tensile strength of melt bonded member | MPa | 30 | 46 | 50 | 50 | 49 |
| | Evaluation of cross-sectional flow area after melt bonding | % | V.good | V.good | V.good | V.good | Good |

From Table 3, if comparing Example 7-1 to Example 7-3 and Comparative Example 7-1 to Comparative Example 7-2, it was confirmed that in Comparative Example 7-1, the melt bonded member had a tensile strength lower compared with the tensile strength of the pipe alone, that is, about 80% of the tensile strength of the pipe alone, while in Example 7-1, Example 7-2, Example 7-3, and Comparative Example 7-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 7-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 7-1, Example 7-1, Example 7-2, and Example 7-3, the melt bonded fittings had cross-sectional flow areas of areas of about the same extents as the cross-sectional flow areas of the pipes before hot bonding, that is, the cross-sectional flow areas were not reduced due to deformation of the beads or pipes. From this, in a piping member made from a polyphenylene ether-based resin composition obtained by kneading a polyphenylene ether-based resin in 50 parts by mass and a high impact polystyrene in 50 parts by mass and having a wall thickness t (mm) of 3.5 mm, if considering the physical properties required in the field in which the member is expected to be used, when the heating temperature when hot bonding the pipe and fitting is 270°C, the heating time is preferably 8 seconds to 35 seconds.

From Table 3, if comparing Example 8-1 to Example 8-3 and Comparative Example 8-1 to Comparative Example 8-2, it was confirmed that in Comparative Example 8-1, the melt bonded member had a tensile strength lower compared with the tensile strength of the pipe alone, that is, about 60% of the tensile strength of the pipe alone, while in Example 8-1, Example 8-2, Example 8-3, and Comparative Example 8-2, the melt bonded members had tensile strengths of strengths of about the same extent as the tensile strengths of the pipes alone, that is, the pipe parts of the pipes and the mouth parts of the fittings were integrally joined by melt bonding. Further, it was confirmed that in Comparative Example 8-2, the melt bonded fitting had a cross-sectional flow area reduced compared with the cross-sectional flow area of the pipe before hot bonding, that is, an area of about 89 to 80% of the cross-sectional flow area of the pipe before hot bonding, while in Comparative Example 8-1, Example 8-1, Example 8-2, and Example 8-3, the melt bonded fittings had cross-sectional flow areas of areas of about the same extents as the cross-sectional flow areas of the pipes before hot bonding, that is, the cross-sectional flow areas were not reduced due to deformation of the beads or pipes. From this, in a piping member made from a polyphenylene ether-based resin composition obtained by kneading a polyphenylene ether-based resin in 50 parts by mass and a high impact polystyrene in 50 parts by mass and having a wall thickness t (mm) of 7.1 mm, if considering the physical properties required in the field in which the member is expected to be used, when the heating temperature when hot bonding the pipe and fitting is 270°C, the heating time is preferably 15 seconds to 40 seconds.

From Example 7 and Example 8, when hot bonding a pipe and fitting, it is learned that despite the compounding ratio of the polyphenylene ether-based resin and the high impact polystyrene and the heating temperature being the same, if the heating time is short, the melt bonded member falls in tensile strength, while if the heating time is long, the melt bonded fitting of the melt bonded member tends to decrease in cross-sectional flow area. This is believed to be because if the heating time is short, the pipe part of the pipe and the mouth part of the fitting are not sufficiently melted and are not sufficiently joined by melt bonded. Further, if the heating time is long, the outer circumference of the pipe part and the inner circumference of the mouth part end up being melted more than necessary and, when inserting the pipe part into the mouth part, the pipe deforming and the cross-sectional flow area being reduced.

Further, if comparing Example 7 and Example 8, despite the compounding ratio of the polyphenylene ether-based resin and the high impact polystyrene and the heating temperature being the same, the suitable heating time differs. This is because in a pipe made of an amorphous resin such as a polyphenylene ether-based resin composition when hot bonded, the entire thickness of the heated part softens, then the outer circumference of the pipe part melts, so the heating time depends on the wall thickness t(mm). Due to the experimental results, if expressing the suitable range of the heating time T (seconds) with respect to the wall thickness t (mm) by a relationship, 1.7t+1(sec)<T<1.7t+30 (sec) is preferable.

Test Example 4

Next, Next, a test was run to confirm the effect of the compounding ratio of the polyphenylene ether-based resin composition on the impact strength and stress crack resistance.

Example 9

From pipes made of the polyphenylene ether-based resin compositions used in Example 2-2, Example 3-2, Example 4-2, Example 5-2, and Example 6-2, test pieces for Izod impact tests and test pieces for stress crack tests were cut out and Izod impact tests and stress crack tests were run. The results of the tests are shown in Table 4.

Table 4

| Item | | | Ex. 2-2 | Ex. 3-2 | Ex. 4-2 | Ex. 5-2 | Ex. 6-2 |
|---|---|---|---|---|---|---|---|
| Composition of formulation (parts by mass) | Polyphenylene ether resin | % | 30 | 40 | 50 | 60 | 70 |
| | High impact polystyrene | % | 70 | 60 | 50 | 40 | 30 |
| Evaluation of pipe | Tensile strength of pipe | MPa | 40 | 45 | 50 | 60 | 65 |
| Evaluation of composition | Izod impact strength | kJ/m$^2$ | 12 | 10 | 9 | 7 | 7 |
| | Stress crackability (after 56 immersion in chemical) | Cracks | No cracks | No cracks | No cracks | No cracks | No cracks |

From Table 4, if comparing Example 2-2, Example 3-2, Example 4-2, Example 5-2, and Example 6-2, as the polyphenylene ether-based resin becomes lower in compounding ratio, the Izod impact strength becomes higher and the tensile strength of the pipe alone becomes lower as a general trend. Further, as the polyphenylene ether-based resin becomes higher in compounding ratio, the Izod impact strength becomes lower and the tensile strength of the pipe alone becomes higher as a general trend. This is due to the rubber ingredient contained in the high impact polystyrene having an effect on the Izod impact strength. The balance of the Izod impact strength and the tensile strength of the pipe alone depends on the compounding ratio of the polyphenylene ether-based resin and the high impact polystyrene. Therefore, to obtain a piping member having an Izod impact strength and a tensile strength of the pipe alone in a good balance, the polyphenylene ether-based resin is preferably in a range of 40 to 60 parts by mass and the high impact polystyrene is preferably in a range of 60 to 40 parts by mass.

**Claims**

1.   A method of connection of piping members made from a polyphenylene ether-based resin composition which connects a pipe part and a mouth part of piping members made from a polyphenylene ether-based resin composition obtained by molding a polyphenylene ether-based resin composition, said method of connection **characterized in that**
the piping members made from a polyphenylene ether-based resin composition are comprised of a polyphenylene ether-based resin composition which
has a polyphenylene ether-based resin in "a" parts by mass and a polystyrene-based resin in "b" parts by mass as essential ingredients,
has said "a" and "b" satisfying the relationships of

$$a+b=100$$

and

$$a:b=(10 \text{ to } 90):(90 \text{ to } 10),$$

and

has a melt flow rate after kneading of 1.0 to 10.0 g/10 min, comprising heating and melting an outer circumferences of the pipe part and an inner circumferences of the mouth part of the piping members made from a polyphenylene ether-based resin composition by a heating temperature H(°C) of

$$H=[220°C+\{100°C\times("a" \text{ parts by mass}/100 \text{ parts by mass})\}]\pm10°C$$

then inserting said pipe part into said mouth part to melt bond them.

2. A method of connection of piping members made from a polyphenylene ether-based resin composition as set forth in claim 1, wherein said "a" and "b" satisfy the relationships of

$$a+b=100$$

and

$$a:b=(40 \text{ to } 60):(60 \text{ to } 40).$$

3. A method of connection of piping members made from a polyphenylene ether-based resin composition as set forth in claim 1 or claim 2, wherein a heating time T (seconds) when heating and melting a pipe part and mouth part of said piping members made from a polyphenylene ether-based resin composition is, with respect to the wall thickness t (mm) of the piping member,

$$1.7\times t+1<T<1.7\times t+30.$$

4. A method of connection of piping members made from a polyphenylene ether-based resin composition as set forth in claim 3, wherein a pipe part and mouth part of said piping members made from a polyphenylene ether-based resin composition satisfies the relationships of

$$0.2D+4<L<0.4D+60$$

and

$$15<D<225$$

when the pipe part has an outside diameter of D (mm) and the mouth part has a melt bonded part length of L (mm).

5. Piping members made from a polyphenylene ether-based resin composition connected by the method of connection of any one of claim 1 to claim 4.

6. Piping members made from a polyphenylene ether-based resin composition as set forth in claim 5 wherein said piping members are any of a pipe, fitting, and valve.

Fig.1

Fig.2

Fig.3

# Fig.4

# Fig.5

EP 2 327 918 A1

# Fig.6

EP 2 327 918 A1

# Fig.7

EP 2 327 918 A1

Fig.8

EP 2 327 918 A1

## INTERNATIONAL SEARCH REPORT

| | International application No. |
|---|---|
| | PCT/JP2009/066710 |

### A. CLASSIFICATION OF SUBJECT MATTER

*F16L47/02*(2006.01)i, *C08L25/04*(2006.01)i, *C08L71/12*(2006.01)i

According to International Patent Classification (IPC) or to both national classification and IPC

### B. FIELDS SEARCHED

Minimum documentation searched (classification system followed by classification symbols)

F16L47/02, C08L25/04, C08L71/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-181273 A (Daicel-Degussa Ltd.),<br>26 June 2002 (26.06.2002),<br>entire text; all drawings<br>(Family: none) | 1-6 |
| A | JP 2003-207087 A (Sekisui Chemical Co., Ltd.),<br>25 July 2003 (25.07.2003),<br>entire text; all drawings<br>(Family: none) | 1-6 |
| A | JP 8-216262 A (Sekisui Chemical Co., Ltd.),<br>27 August 1996 (27.08.1996),<br>entire text; all drawings<br>(Family: none) | 1-6 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 November, 2009 (24.11.09) | 01 December, 2009 (01.12.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2009/066710 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 4-337191 A  (Sumitomo Metal Industries, Ltd.), 25 November 1992 (25.11.1992), entire text; all drawings (Family: none) | 1-6 |
| A | JP 59-101327 A  (Dainichi-Nippon Cables, Ltd.), 11 June 1984 (11.06.1984), entire text; all drawings (Family: none) | 1-6 |
| A | JP 2000-257786 A  (Japan Polychem Corp.), 19 September 2000 (19.09.2000), entire text; all drawings (Family: none) | 1-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8216262 A
- JP 4337191 A
- JP 59101327 A
- JP 2000257786 A